# EUROPÄISCHE PATENTSCHRIFT

(11) **EP 0 442 031 B1**
(45) Veröffentlichungstag und Bekanntmachung des Hinweises auf die Patenterteilung: **24.02.1993**
(21) Anmeldenummer: 90115408.8
(22) Anmeldetag: 10.08.1990
(51) Int. Cl.: F04C 15/00

(54) **Bremse für einen Hydromotor**
Brake for a hydraulic motor
Frein pour moteur hydraulique

(30) Priorität: 13.02.1990 DE 4004411; 15.03.1990 DE 4008362
(43) Veröffentlichungstag der Anmeldung: 21.08.1991
(73) Patentinhaber: KINSHOFER GREIFTECHNIK GMBH, D-63666 Waakirchen (DE)
(72) Erfinder: Spindeldreher, Walter, D-8167 Irschenberg (DE)
(74) Vertreter: Gossel, Hans K., Dipl.-Ing.

(56) Entgegenhaltungen:
- DE-A- 1 503 362
- DE-A- 3 125 087
- US-A- 3 960 470

## Beschreibung

Die Erfindung betrifft eine Bremse für einen Hydromotor, vorzugsweise Zahnringmotor, die unter dem Druck von Federn schließar und durch einen Hydrozylinder lösbar ist,und die die Abtriebswelle im drucklosen Zustand des Hydromotors blockiert und die bei Beaufschlagung des Hydromotors mit unter Druck stehender Druckflüssigkeit durch den Hydrozylinder gelöst wird. Eine derartige Bremse ist z.B. aus der US-A-39 60 470 bekannt.

Werden Hydromotoren als Motoren von Winden oder von Greifern eingesetzt, ist es erwünscht und in vielen Fällen auch erforderlich, daß die Motorwelle durch die Bremse blockiert ist, wenn der Hydromotor kein Drehmoment abgibt, sich also in einem drucklosen Zustand befindet.

Es ist an sich bekannt, die Motorwelle durch eine von Druckfedern beaufschlagte Bremse zur blockieren, wobei die Druckfedern zur Lüftung der Bremse von einem Hydrozylinder zusammengedrückt werden, wenn der Motor zu seinem Anlauf mit unter Druck stehender Hydroflüssigkeit gespeist wird. Diese Hydroflüssigkeit beaufschlagt gleichzeitig auch den Hydrozylinder und löst daher die Bremse.

Ein besonderes Problem ergibt sich aber daraus, daß beim Schließen der Druckleitung der Motor zwar stehenbleibt, weil diesem keine unter Druck stehende Hydroflüssigkeit mehr zugeführt wird, und daß dann aber Hydroflüssigkeit aus dem Hydromotor, der im wesentlichen drucklos ist, nicht mehr zurückfließen kann. Dies hat zur Folge, daß die Druckflüssigkeit dann auch nicht aus dem die Bremse lösenden Hydrozylinder heraustreten kann und die Bremse dann auch während des Stillstandes des Motors gelöst bleibt. Um ein Schließen der Bremse zu ermöglichen, wenn der Hydromotor durch Schließen der diesen mit Hydroflüssigkeit speisenden Druckleitung angehalten wird, müssen daher besondere Einrichtungen vorgesehen werden, die einen Rückfluß der in dem Hydrozylinder vorhandenen Hydraulikflüssigkeit ermöglichen.

Aufgabe der Erfindung ist es daher, eine Bremse der eingangs angegebenen Art zu schaffen, bei der sich die Hydraulikflüssigkeit in einfacher Weise aus dem Hydrozylinder abführen läßt, um dadurch die Bremse einfallen zu lassen. Die Hydraulikflüssigkeit soll sich auch dann abführen lassen, wenn die zu dem Hydrozylinder führenden Leitungen geschlossen oder blockiert sind, was beispielsweise der Fall ist, wenn einem mit einer Bremse versehenen Hydromotor bei dessen Stillstand keine Hydraulikflüssigkeit zugeführt wird.

Erfindungsgemäß wird diese Aufgabe bei einer Bremse der gattungsgemäßen Art dadurch gelöst, daß der Kolben des Hydrozylinders mit einer Blende oder Drosselbohrung versehen ist, durch die die Hydroflüssigkeit in einen drucklosen Raum oder einen Raum mit niedrigerem Druck, vorzugsweise in einen Raum des Hydromotors, treten kann. Ist die erfindungsgemäße Bremse an einem Hydromotor angeordnet, kann bei einem Motorstillstand und der durch diesen bedingten Unterbrechung der Zufuhr von unter Druck stehender Hydroflüssigkeit aus dem Hydrozylinder die Hydraulikflüssigkeit durch die Drosselbohrung zurückfließen, so daß die Druckfedern dann die Bremse schließen. Da der Kolben von der Kraft der Druckfedern beaufschlagt wird, verdrängen diese bei einem Schließen der Druckleitung des Hydromotors die im Zylinder vorhandene Hydroflüssigkeit bis zum Schließen der Bremse. Da das die Hydraulikflüssigkeit aufnehmende Volumen des Hydromotors durch den zurückgedrängten Stufenkolben vergrößert wird, kann der entsprechende Raum des Hydromotors die aus dem Hydrozylinder bzw. dem ringförmigen Zylinderraum verdrängte Menge von Hydraulikflüssigkeit aufnehmen.

Dabei ist der Querschnitt der Drosselbohrung so zu wählen, daß in dieser ein so großer Druckabfall erfolgt, daß die auf der Druckseite eintretende Druckminderung vernachlässigbar ist. Zusätzlich kann eine Verschließeinrichtung vorgesehen werden, die die Drosselbohrung oder die Blende verschließt, nachdem der Kolben des Hydrozylinders die Bremse gelüftet hat. In diesem Falle findet während des Motorbetriebes kein Durchfluß von Hydroflüssigkeit durch die Bremse oder Drosselbohrung statt, so daß die auch sonst nur geringen Verluste vermieden werden.

Aus DE-A-15 03 362 ist ein Hydromotor mit Haltebremse bekannt, in dessen Zuführungskanälen einstellbare Drosselorgane angeordnet sind, durch die eine ein schlagartiges Schließen der Bremse behindernde bzw. ein weiches Anfahren des Motors ermöglichende Dämpfung eingestellt werden kann.

Aus US-A-39 60 470 ist ein Hydromotor mit Bremse bekannt, deren Hydrozylinder mit einer Bohrung versehen ist, die in eine mit einem Ventil versehene Leitung mündet, wobei durch entsprechende Schaltung des Ventils der Zylinder mit unter Druck stehender Hydraulikflüssigkeit gespeist wird und diese nach Entlastung der Druckleitung durch Umschalten des Ventils wieder abgeleitet werden kann. Dieser bekannte Hydromotor ist verhältnismäßig aufwendig, da ein unterschiedliche Leitungen schließendes und freigebendes Ventil vorgesehen werden muß, um den Hydrozylinder mit unter Druck stehender Hydraulikflüssigkeit zu speisen und die Hydraulikflüssigkeit aus diesem nach Entlastung der Druckleitung wieder abführen zu können.

Mit besonderem Vorteil läßt sich die Erfindung bei einem Zahnringmotor oder einer hydraulischen innenverzahnten Zahnradmaschine mit einer verzahnten Welle und einem mit Innen- und Außenverzahnungen versehenen Ringkolben, der mit der Innenverzahnung des Gehäuses oder der Verzahnung der Welle Verdrängungskammern bildet und aufgrund seiner taumelnden Bewegung Einlaß- und Auslaßsteueröffnungen auf- und zusteuert, verwirklichen, wie er beispielweise aus den DE-PS 33 42 131 und 37 29 049 bekannt ist. Derartige Motore werden üblicherweise als Motore zum Verdrehen von Greifern o.dgl. verwendet. Diese Motoren weisen keine Bremsen auf, so daß sie nach dem Schließen der Druckleitung zur Speisung mit Hydraulikflüssigkeit weiter drehen können. Nach einer besonders vorteilhaften Ausgestaltung der Erfindung ist daher insbesondere bei einem Zahnringmotor vorgesehen, daß die Bremse eine Lamellenbremse ist, deren abwechselnd mit einer Innen- und Außenverzahnung versehenen Lamellen einerseits auf Keilnuten der Abtriebswelle und andererseits auf Keilnuten des Gehäuses in axialer Richtung verschieblich geführt sind, daß der Kolben ein die Abtriebswelle einfassender ringförmiger Stufenkolben ist, der an entsprechenden zylindrischen Wandungen des Gehäuses, zwischen denen eine Stufe gebildet ist, geführt ist, daß zwischen den Stufen des Stufenkolbens und den zylindrischen Wandungen eine ringförmige zylindrische Kammer gebildet ist, die über eine Bohrung oder Leitung mit der Druckleitung des Hydromotors verbunden ist, und daß zwischen dem Kolben und einem gehäusefesten Widerlager diese beaufschlagende Druckfedern eingespannt sind, die bei druckloser oder fast druckloser Zylinderkammern den Stufenkolben gegen das gehäuse- oder wellenfest abgestützte Lamellenpaket drücken. Eine derartige Lamellenbremse läßt sich in besonders günstiger Weise bei einer hydraulischen innenverzahnten Zahnradmaschine verwirklichen, weil diese eine Abtriebswelle aufweist, die konzentrisch aus dem diese umgebenden zylindrischen Gehäuseteil herausgeführt ist. Bei einem derartigen Motor läßt sich wiederum nur durch eine einfache durch den Kolben hindurchgeführt Bohrung sicherstellen, daß nach dem Abschließen der den Hydromotor antreibenden Druckleitung die in dem Hydrozylinder eingesperrte Hydraulikflüssigkeit austreten kann.

Zweckmäßigerweise ist der Stufenkolben auf seiner dem Lamellenpaket zugewandten Seite mit einem ringförmigen Fortsatz versehen, der gleichsam einen Druckring zum Zusammendrücken des Lamellenpaketes bildet.

In weiterer Ausgestaltung der Erfindung ist vorgesehen, daß die Drosselbohrung in einer ringförmigen Stirnseite des Stufenkolbens mündet, die bei unter Druck stehender Zylinderkammer gegen einen gehäusefesten Sitz gedrückt wird. Diese Ausgestaltung verhindert einen ständigen Durchfluß von Hydraulikflüssigkeit während des Motorbetriebes, weil die Drosselbohrung geschlossen wird, wenn der Kolben gegen seinen Endanschlag fährt.

Dieser gehäusefeste Sitz kann durch den Außenring eines Wälzlagers gebildet werden.

Zweckmäßigerweise stützen sich die Druckfedern auf einem auf dem Außenring eines Wälzlagers aufliegenden Stützring ab.

Ein Ausführungsbeispiel der Erfindung wird nachstehend anhand der Zeichnung näher erläutert, in der
Fig.1 einen Längsschnitt durch einen Hydromotor in Form einer innenverzahnten Zahnradmaschine und
Fig.2 eine Draufsicht auf die verzahnte Welle und den mit Innen- und Außenverzahnungen versehenen Ringkolben zeigt, der mit der Verzahnung der Welle Verdrängungskammern bildet.

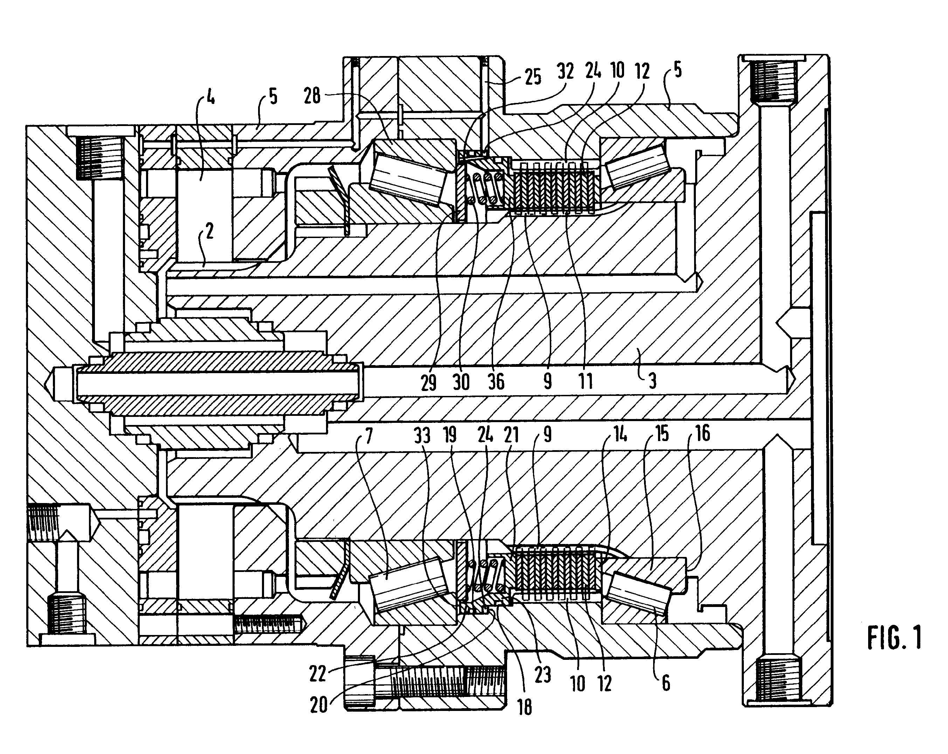

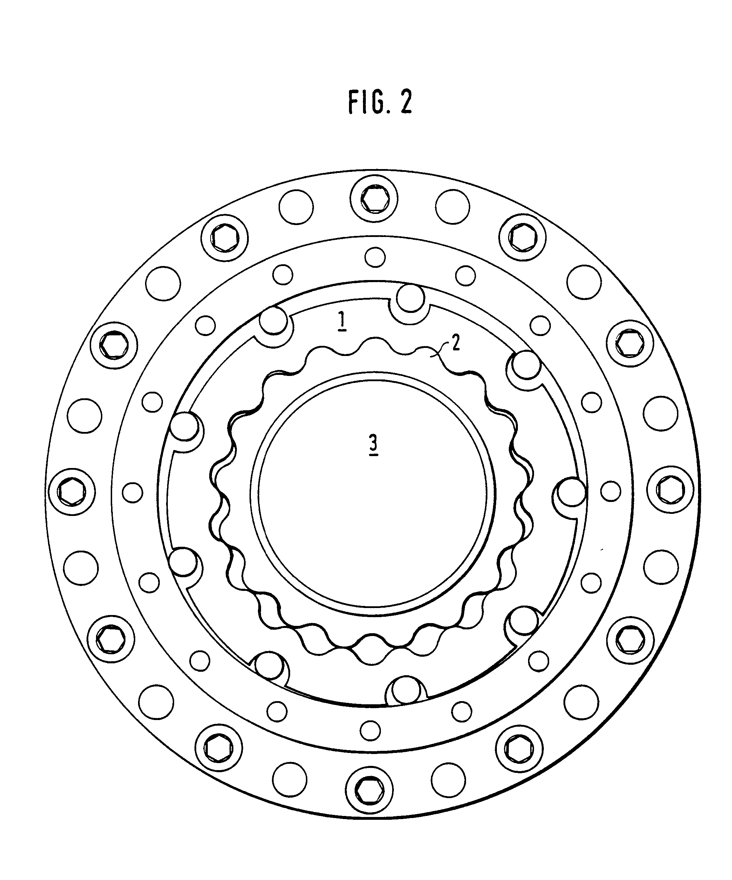

Die in der Zeichnung dargestellte hydraulische innenverzahnte Zahnradmaschine entspricht in ihrem grundsätzlichen Aufbau und in ihrer Funktionsweise den aus den DE-PS 33 42 131 und 37 29 049 beschriebenen Hydromotoren, so daß auf diese Bezug genommen und hier auf eine nähere Darstellung verzichtet wird. In Fig.1 ist der aus Fig.2 ersichtliche Ringkolben 1, der mit der Verzahnung 2 der Welle 3 die Verdrängungskammern bildet, nicht dargestellt. Der Ringkolben 1 ist in Fig.1 in der Kammer 4 angeordnet.

Die Welle 3 ist in dem zylindrischen Gehäuse 5, das mehrteilig durch Ringe aufgebaut ist, durch die Kegelrollenlager 6,7 gelagert. Die Welle 3 ist zwischen den Wälzlagern 6,7 mit parallel zu Mantellinien verlaufenden Vielkeilnuten 9 versehen. Entsprechend ist auch die zylindrische Innenwandug des Gehäuses 5 mit parallel verlaufenden Vielkeilnuten 10 versehen. In die Vielkeilnuten 9 der Welle 3 greifen die Innenverzahnungen von Lamellen 11, während in die Vielkeilnuten 10 die Außenverzahnungen der Lamellen 12 einer Lamellenbremse greifen. Das durch die Lamellen 11,12 gebildete Lamellenpaket der Lamellenbremse ist auf einem Ring 14 abgestützt, der auf dem Innenring 15 des Wälzlagers 6 aufliegt, der in der Ringstufe 16 der Welle 3 gehalten ist.

Anschließend an den mit den Innenvielkeilnuten 10 versehenen Bereich ist das Gehäuse mit Bereichen mit glatten zylindrischen Wandungen 18,19 versehen, von denen der Bereich 18 einen geringeren Durchmesser aufweist, so daß zwischen den Bereichen 18,19 eine Stufe 20 gebildet ist. An den zylindrischen Wandungsabschnitten 18,19 ist ein ringförmiger Stufenkolben 21 geführt, der die Welle 3 einfaßt. Der Stufenkolben 21 weist entsprechend den zylindrischen Wandungsabschnitten 18,19 abgestufte Bereiche 22,23 auf, so daß zwischen den Stufen des Gehäuses 5 einerseits und des Kolbens 21 andererseits ein ringförmiger Zylinderraum 24 gebildet ist. In diesen ringförmigen Zylinderrraum mündet die Bohrung 25 in dem Gehäuse 5, die über weitere Bohrungen in der dargestellten Weise mit der Druckseite des Zahnringmotors verbunden ist.

Auf dem gehäusefesten Außenring 28 des Wälzlagers 7 liegt ein Ring 29 an. Zwischen dem Ring 29 und entsprechenden Haltebohrungen auf der Rückseite des Kolbens 21 sind die Druckfedern 30 eingespannt.

Der Kolben 21 ist mit einer Drosselbohrung 32 versehen, die die ringförmige Zylinderkammer 24 mit der gegenüberliegenden ringförmigen Stirnseite 33 des Kolbens 21 verbindet. Da die Drosselbohrung 32 in der ringförmigen Stirnseite 33 des ringförmigen Kolbens 21 mündet, wird die Drosselbohrung abgeschlossen, wenn sich die ringförmige Stirnfläche 33 gegen den Außenring 28 des Wälzlagers 7 anlegt.

Auf seiner dem Lamellenpaket 11,12 zugewandten Seite ist der ringförmige Kolben 21 mit einem ringförmigen Vorsprung 36 versehen, der gleichsam einen Druckring zum Zusammendrücken des Lamellenpaketes bildet, wenn nach Entlastung des ringförmigen Zylinderraumes 24 die Druckfedern 30 den ringförmigen Kolben 21 gegen das Lamellenpaket drücken und dadurch die Bremse einfallen lassen.

Im dargestellten Ausführungsbeispiel kann beispielsweise die Literleistung des Zahnringmotors 20 l/min bei einem Systemdruck von 200 bar betragen. Hat die Blende 32 einen Bohrungsdurchmesser von 0,5 mm, ergibt sich etwa eine Druckdifferenz auf den beiden Seiten des Ringkolbens 21 von 4 bar, so daß das Druckverhältnis 200/196 beträgt. Diese Druckdifferenz ist nahezu vernachlässigbar, weil die Durchflußmenge nur 2-3 l/min beträgt.

Das zu verdrängende Volumen der ringförmigen Zylinderkammer 24 nach Abschluß der Druckleitung des Motors beträgt etwa 6cm³, so daß die Bremse bei Motorstillstand relativ schnell einfällt.

Da der unter Druck stehende Ringkolben 21 mit seiner ringförmigen Stirnfläche 22 gegen den Außenring 28 des Wälzlagers 7 gefahren wird, tritt durch die Drosselbohrung 32 nur wärend der Bewegung des ringförmigen Kolbens 21 zum Lüften der Lamellenbremse Hydraulikflüssigkeit. Sobald sich der Kolben mit seiner ringförmigen Stirnfläche gegen den Außenring 28 abstützt, wird die Drosselbohrung 32 im wesentlichen geschlossen.

Die durch die Drosselbohrung 24 tretende Hydraulikflüssigkeit fließt in den Innrenraum des Hydromotors hinter den Ringkolben 21, der die aus der Zylinderkammer 24 verdrängte Hydraulikflüssigkeit aufnehmen kann, weil sich dieser infolge des zurückgedrängten Kolbens entsprechend vergrößert.

## Patentansprüche

1. Bremse für einen Hydromotor, vorzugsweise Zahnringmotor, die unter dem Druck von Federn (30) schließbar und durch einen Hydrozylinder (18,19) lösbar ist und die die Abtriebswelle im drucklosen Zustand des Hydromotors blockiert und die bei Beaufschlagung des Hydromotors mit unter Druck stehender Druckflüssigkeit durch den Hydrozylinder gelöst wird,
**dadurch gekennzeichnet**,
daß der Kolben (21) des Hydrozylinder (18,19) mit einer Blende oder Drosselbohrung (32) versehen ist, durch die die Hydroflüssigkeit in einen drucklosen Raum oder einen Raum mit niedrigerem Druck, vorzugsweise in einen Raum des Hydromotors, treten kann.

2. Bremse nach Anspruch 1, dadurch gekennzeichnet, daß die Bremse eine Lamellenbremse ist, deren abwechselnd mit einer Innen- und Außenverzahnung versehenen Lamellen (11,12) einerseits auf Keilnuten (9) der Abtriebswelle (3) und andererseits auf Keilnuten (10) des Gehäuses (5) in axialer Richtung verschieblich geführt sind, daß der Kolben ein die Abtriebswelle (3) einfassender ringförmiger Stufenkolben (21) ist, der an entsprechenden zylindrischen Wandungen (18,19) des Gehäuses (5), zwischen denen eine Stufe (20) gebildet ist, geführt ist, daß zwischen den Stufen des Stufenkolbens (21) und der zylindrischen Wandungen (18,19) eine ringförmige Zylinderkammer (24) gebildet ist, die über eine Bohrung (25) oder Leitung mit der Druckleitung des Hydromotors verbunden ist, und daß zwischen dem Kolben (21) und einem gehäusefesten Widerlager (29) diese beaufschlagende Druckfedern (30) eingespannt sind, die bei druckloser oder fast druckloser Zylinderkammer (24) den Stufenkolben (21) gegen das gehäuse- oder wellenfest abgestützte Lamellenpaket drücken.

3. Bremse nach Anspruch 2, dadurch gekennzeichnet, daß der Stufenkolben (21) auf seiner den Lamellen (11,12) zugewandten Seite mit einem ringförmigen Fortsatz (36) versehen ist.

4. Bremse nach Anspruch 2 oder 3, dadurch gekennzeichnet, daß die Drosselbohrung (32) in einer ringförmigen Stirnseite (33) des Stufenkolbens (21) mündet, die bei unter Druck stehender Zylinderkammer (24) gegen einen gehäusefesten Sitz gedrückt wird.

5. Bremse nach Anspruch 4, dadurch gekennzeichnet, daß der Sitz durch den Außenring (28) eines Wälzlagers (7) gebildet ist.

6. Bremse nach einem der vorhergehenden Ansprüche, dadurch gekennzeichnet, daß die Druckfedern (30) auf einem auf dem Außenring (28) eines Wälzlagers (7) aufliegenden Stützring (29) abgestützt sind.

## Claims

1. A brake for a hydraulic motor, preferably an annular gear motor, which can be closed under the pressure of springs (30) and can be released by a hydraulic cylinder (18, 19) and which locks the output shaft in the nonpressurized state of the hydraulic motor and which is released by the hydraulic cylinder when the hydraulic motor is acted on by a pressurized hydraulic fluid,
**characterized in that**
the piston (21) of the hydraulic cylinder (18, 19) is provided with an aperture of restriction bore (32) through which the hydraulic fluid can enter into a nonpressurized compartment or a compartment at a lower pressure, preferably into a compartment of the hydraulic motor.

2. A brake according to claim 1, characterized in that the brake is a multiple disk brake whose disks (11, 12) alternately provided with an internal and an external tooth system are carried on the one hand, on keyways (9) of the output shaft (3) and on the other hand, on keyways (10) of the casing (5) for displacement in the axial direction; that the piston is an annular step piston (21) surrounding the output shaft (3), which piston is carried on corresponding cylindrical walls (18, 19) of the casing (5), between which there is formed a step (20); that an annular cylindrical chamber (24) is formed between the steps of the step piston (21) and the cylindrical walls (18, 19), which chamber is connected to the pressure line of the hydraulic motor via a bore (25) or a line; and that between the piston (21) and a bearing support (29) fixed to the frame, there are mounted compression springs (30) bearing thereon, which press the step piston (21) against the disk package supported on the casing or shaft when the cylindrical chamber (24) is nonpressurized or almost nonpressurized.

3. A brake according to claim 2, characterized in that the step piston (21) is, on its side facing the disks (11, 12), provided with an annular extension (36).

4. A brake according to claim 2 or 3, characterized in that the restriction bore (32) opens out in an annular end face (33) of the step piston (21) which face is pressed against a seat fixed to the casing when the cylindrical chamber (24) is pressurized.

5. A brake according to claim 4, characterized in that the seat is formed by an outer race (28) of a roller bearing (7).

6. A brake according to one of the preceding claims, characterized in that the compression springs (30) are supported on a supporting ring (29) bearing on the outer race (28) of a roller bearing (7).

## Revendications

1. Frein pour moteur hydraulique, de préférence pour un moteur de couronne dentée et qui peut être fermé ou serré sous la pression de ressorts (30) et qui peut être relâché par un cylindre hydraulique (18, 19), qui bloque l'arbre de sortie dans l'état exempt de pression du moteur hydraulique et qui est relâché par le cylindre hydraulique lors de l'alimentation du moteur hydraulique en fluide sous pression, caractérisé en ce que le piston (21) du cylindre hydraulique (18, 19) est pourvu d'un obturateur ou d'un orifice d'étranglement (32) à travers lequel le fluide hydraulique peut passer dans une enceinte exempt de pression ou dans une enceinte dans laquelle règne une pression faible, de préférence dans une enceinte du moteur hydraulique.

2. Frein selon la revendication 1, caractérisé en ce que le frein est un frein à disques multiples dont les lamelles (11, 12) pourvues, alternativement, d'une denture intérieure et extérieures sont guidées de façon déplacables dans la direction axiale, d'une part, sur des rainures de clavettes (9) de l'arbre de sortie (3) et, d'autre part, sur des rainures de clavettes (10) du boîtier (5), en ce que le piston est un piston à gradins (21)annulaire entourant l'arbre de sortie (3), qui est guidé sur des parois cylindriques correspondantes (18, 19) du boîtier (5), entre lesquels est formé un gradin (20), en ce qu'on réalise entre les gradins du piston à gradins (21) et les parois cylindriques (18, 19) une chambre de cylindre annulaire (24) qui est reliée par un perçage (25) ou un conduit avec le conduit sous pression du moteur hydraulique, et en ce que, entre le piston (21) et une butée (29) solidaire du boîtier sont serrés des ressort de pression (30) sollicitant ceux-ci, lorsqu'il n'y a pas ou presque pas de pression dans la chambre de cylindre (24), poussent le piston à gradins (21) contre le groupe des lamelles prenant appui, de façon solidaire, sur le bâti ou l'arbre.

3. Frein selon la revendication 2, caractérisé en ce que le piston à gradins (21) est pourvu sur son côté orienté vers les lamelles (11, 12) d'un prolongement annulaire (36).

4. Frein selon la revendication 2 ou 3, caractérisé en ce que l'orifice d'étranglement (32) débouche dans un côté frontal annulaire (33) du piston à gradin (21) qui est poussé contre un siège solidaire du bâti lorsque la chambre du cylindre (24) est sous pression.

5. Frein selon la revendication 4, caractérisé en ce que le siège est constitué par l'anneau extérieur (28) d'un palier à roulement (7).

6. Frein selon l'une des revendications précédentes, caractérisé en ce que les ressorts de pression (30) prennent appui sur un anneau d'appui (29) reposant sur l'anneau extérieur (28) d'un palier à roulement (7).
